(19)

**Europäisches Patentamt**
**European Patent Office**
**Office européen des brevets**

(11) **EP 2 775 378 A1**

(12) **EUROPEAN PATENT APPLICATION**

(43) Date of publication:
**10.09.2014 Bulletin 2014/37**

(51) Int Cl.:
***G06F 3/042*** *(2006.01)*     ***G06F 3/0354*** *(2013.01)*

(21) Application number: **14155666.2**

(22) Date of filing: **19.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.03.2013 JP 2013046595**
**22.01.2014 JP 2014009533**

(71) Applicant: **Ricoh Company, Ltd.**
**Tokyo 143-8555 (JP)**

(72) Inventors:
• **Omura, Katsuyuki**
**Tokyo, 143-8555 (JP)**
• **Kawaguchi, Atsuo**
**Tokyo, 143-8555 (JP)**

(74) Representative: **Schwabe - Sandmair - Marx**
**Patentanwälte**
**Stuntzstraße 16**
**81677 München (DE)**

(54) **Stylus and optical touch panel device**

(57)     A stylus (10) includes an end having a surface, an arbitrary area of which is to be moved close to or brought into contact with a desired position on a touch panel (12) of an optical touch panel device. The end includes a light shielding member (104a) configured to block at least part of incident light. The stylus (10) extends along an axis line that passes through a center of gravity (C) of the light shielding member (104a). A distance between a predetermined part of the light shielding member (104a) on the axis line and the arbitrary area is constant.

FIG.7

**Description**

FIELD OF THE INVENTION

The present invention relates to a stylus and an optical touch panel device.

BACKGROUND OF THE INVENTION

A conventional technology is disclosed (for example, see Japanese Patent No. 4627781) in which two light emitting/receiving units each emit light along a touch panel on which a desired position is pointed by using a stylus, the positional information is detected on the shadow (light blocked image) that occurs when the light is blocked by the end of the stylus, and the positional information on the above-described desired position is determined on the basis of the above positional information.

However, according to the technology disclosed in Japanese Patent No. 4627781, it is difficult to determine the positional information on the above-described desired position in a stable and accurate manner.

SUMMARY OF THE INVENTION

It is an object of the present invention to at least partially solve the problems in the conventional technology.

According to an embodiment, there is provided a stylus that includes an end having a surface, an arbitrary area of which is to be moved close to or brought into contact with a desired position on a touch panel of an optical touch panel device. The end includes a light shielding member configured to block at least part of incident light. The stylus extends along an axis line that passes through a center of gravity of the light shielding member. A distance between a predetermined part of the light shielding member on the axis line and the arbitrary area is constant.

According to another embodiment, there is provided an optical touch panel device that includes the stylus according to the above embodiment; the touch panel which has a rectangular plate shape and on which the desired position is pointed by using the stylus; a pair of light emitting/receiving devices each configured to include a light emitting unit and a light receiving unit, the light emitting/receiving devices being separately provided on two ends of the touch panel; a retroreflective member configured to reflect incident light into a direction opposite to an incident direction, the retroreflective member being provided along an outer edge of the touch panel; optical systems provided for the light emitting/receiving devices, respectively, each optical system being configured to guide light emitted from the light emitting unit of the corresponding light emitting/receiving device into the retroreflective member so that the light travels along the touch panel, and guide the light reflected by the retroreflective member into the light receiving unit of the corresponding light emitting/receiving device; and a positional-information calculation unit configured to, in response to pointing the desired position by the stylus, calculate positional information of the desired position by using positional information on a shadow that occurs when light emitted by each of the light emitting/receiving devices is blocked by the light shielding member of the stylus.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a block diagram that illustrates a schematic configuration of a control performed by an optical touch panel device according to an embodiment;
FIG. 2 is a diagram that illustrates a method for obtaining the positional information on a desired position that is on a touch panel and that is pointed by using a pointing unit;
FIG. 3 is a diagram that illustrates a method for obtaining the positional information on a desired position that is on the touch panel and that is pointed by using the pointing unit;
FIG. 4 is a diagram that illustrates a method for obtaining the positional information on a desired position that is on the touch panel and that is pointed by using the pointing unit;
FIG. 5 is a diagram that illustrates a method for obtaining the positional information on a desired position that is on the touch panel and that is pointed by using the pointing unit;
FIG. 6 is a diagram that illustrates an optical system that is included in the optical touch panel device;
FIG. 7 is a diagram that illustrates a configuration of a stylus pen that is included in the optical touch panel device;
FIG. 8 illustrates states where a desired position on the touch panel is pointed by using the stylus pen according to the present embodiment;
FIG. 9 illustrates states where a desired position on the touch panel is pointed by using a stylus pen according to a comparative example;
FIG. 10 illustrates a movable pen tip of a stylus pen according to a first modified example and a second modified example in an extracted manner;
FIG. 11 illustrates a movable pen tip of a stylus pen according to a third modified example and a fourth modified example in an extracted manner; and
FIG. 12 illustrates a hardware configuration of an optical touch panel device according to another embodiment of the present invention.

DETAILED DESCRIPTION OF THE PREFERRED EMBODIMENTS

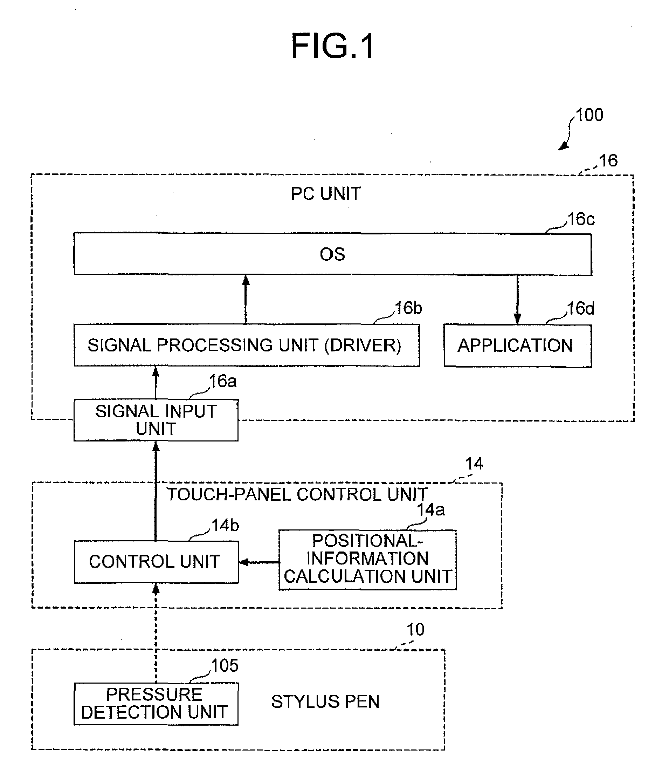

Exemplary embodiments of the present invention are explained in detail below with reference to the accompanying drawings. FIG. 1 illustrates a schematic configuration of an optical touch panel device 100 according to an embodiment.

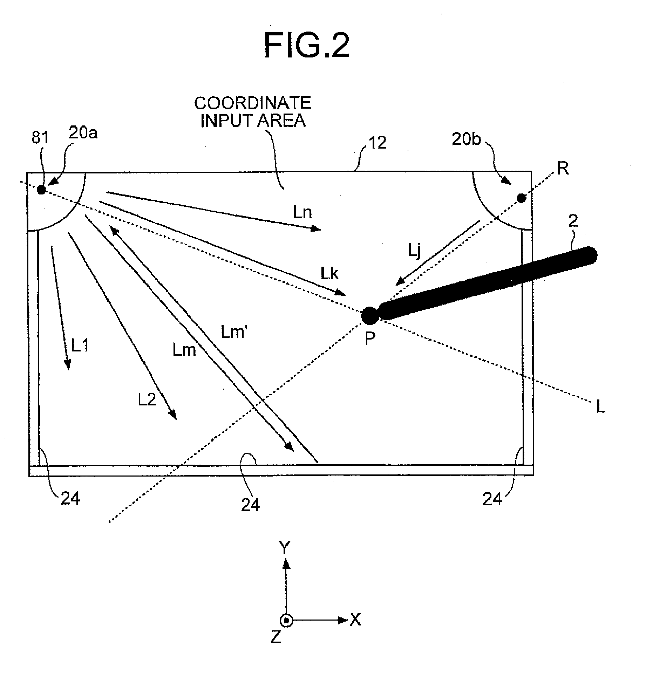

As illustrated in FIG. 1, the optical touch panel device 100 includes, for example, a stylus pen 10, a touch panel 12 (not illustrated in FIG. 1, see FIG. 2), a touch-panel control unit 14, a personal computer (PC) unit 16, or the like. Here, the optical touch panel device 100 serves as what is called an electronic blackboard.

The stylus pen 10 is a pointing device that is used for pointing a desired position on the touch panel 12. The stylus pen 10 will be explained in detail later.

For example, the touch panel 12 is shaped like a rectangular plate. In the following, an explanation is given by using an XYZ three-dimensional orthogonal coordinate system where the longitudinal direction of the touch panel 12 is the direction of an axis X, the lateral direction thereof is the direction of an axis Y, and the direction (the thickness direction of the touch panel 12) perpendicular to the direction of the axis X and the direction of the axis Y is the direction of an axis Z.

A first light emitting/receiving unit 20a is provided on the end of the touch panel 12 on, for example, the -X and +Y side thereof, and a second light emitting/receiving unit 20b is provided on the end of the touch panel 12 on, for example, the +X and +Y side. Here, the first and second light emitting/receiving units 20a and 20b have substantially the same configuration and function. Each of the light emitting/receiving units includes a light receiving/emitting device that includes a light emitting unit 83 and a light receiving unit 50.

Retroreflective members 24 are provided on the edges of the touch panel 12 on the +X side, -X side, and -Y side. Each of the retroreflective members 24 has characteristics such that it reflects an incident light in the direction opposite (the direction reverse) to the incident direction regardless of the incident angle.

The touch-panel control unit 14 includes a positional-information calculation unit 14a that calculates the positional information (XY coordinates) on a desired position that is on the touch panel 12 and that is pointed by using the stylus pen 10; and a control unit 14b that outputs the positional information to the PC unit 16 as appropriate. The positional-information calculation unit 14a will be explained in detail later.

With reference back to FIG. 1, the PC unit 16 includes a signal input unit 16a that inputs the positional information from the control unit 14b; a signal processing unit 16b that processes a signal from the signal input unit 16a; an operating system (OS) 16c that outputs the processing details on the basis of the signal that is processed by the signal processing unit 16b; and an application 16d that uses the processing details from the OS 16c.

Here, an explanation is given, with reference to FIG. 2, of an example of the principle of pointed-position detection performed by the optical touch panel device 100. First, a desired position (a pointed position P) on the touch panel 12 of the optical touch panel device 100 is pressed and pointed by using a pointing unit 2, such as a user's finger, pen, or pointer, which includes an optically opaque component. The positional information (XY coordinates) on the pointed position is detected so that the application 16d can be finally executed.

Furthermore, the first light emitting/receiving unit 20a emits the flux of multiple light beams L1, L2, L3, ..., and Ln (probe light) along the touch panel 12. Specifically, the probe light is a light wave that travels from the first light emitting/receiving unit 20a and expands in a fan-like form along the touch panel 12. In the same manner, the second light emitting/receiving unit 20b emits the flux of multiple light beams (probe light) along the touch panel 12.

One of the fan-like light waves from the first light emitting/receiving unit 20a, i.e., the light beam Lm is reflected by the retroreflective member 24 on the -Y side, and a retroreflected light Lm' returns to the first light emitting/receiving unit 20a through the same optical path as the light beam Lm. In this case, it can be determined whether the retroreflected light of each of the light beams L1 to Ln returns to the first light emitting/receiving unit 20a. In the same manner, it can be determined whether the retroreflected light of each of the light beams emitted by the second light emitting/receiving unit 20b returns to the second light emitting/receiving unit 20b.

When a user touches the pointed position P on the touch panel 12 with, for example, his/her finger, the light beam Lk is blocked by the finger at the pointed position P and does not reach the retroreflective member 24. In this case, as the retroreflected light of the light beam Lk is not received by the first light emitting/receiving unit 20a, it can be determined that a light shielding object exists on the optical path (on a straight line L) of the light beam Lk. In the same manner, as the retroreflected light of the light beam Lj emitted by the second light emitting/receiving unit 20b is not received by the second light emitting/receiving unit 20b, it can be determined that a light shielding object exists on the optical path (on a straight line R) of the light beam Lj.

In this case, the straight line L and the straight line R are determined, and the coordinates of the intersection point of the straight lines are calculated, whereby it is possible to determine the XY coordinates of the pointed position P on the touch panel 12.

Next, an explanation is given of a configuration of the first light emitting/receiving unit 20a and a method of detecting which light beam is blocked by the stylus pen 10 among the light beams L1 to Ln.

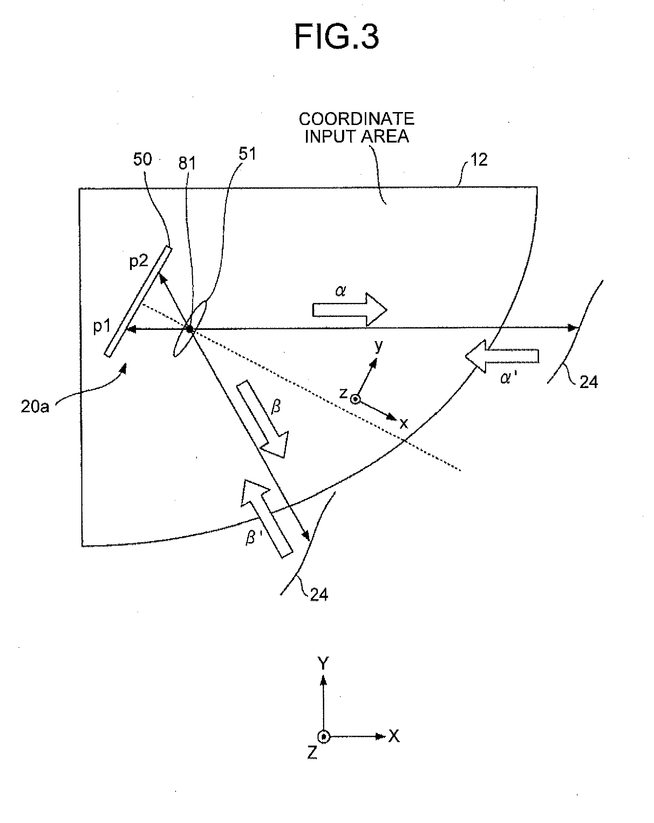

FIG. 3 schematically illustrates the configuration of the first light emitting/receiving unit 20a. The first light emitting/receiving unit 20a includes, in addition to the above-described light receiving/emitting device, an optical system 90 that includes a point light source 81 and a condensing lens 51, or the like. In the following, an explanation is given by using an xyz three-dimensional orthogonal coordinate system (see FIG. 3) where the direction of the optical axis of the condensing lens 51 is the direction of an axis x, the direction perpendicular to the direction of the axis x on a plane parallel to the touch panel 12 is the direction of an axis y, and the direction perpendicular to the direction of the axis x and the direction of the axis y is the direction of an axis z. Furthermore, the direction of the axis z is parallel to the direction of the axis Z.

For example, the point light source 81 is provided on the +x side of the light receiving unit 50 and in the vicinity of the center of the condensing lens 51 so as to emit, to the +x side, fan-like light that is parallel to the xy plane. For example, the light receiving unit 50 is provided in the vicinity of the focus position of the condensing lens 51 such that the light receiving surface of the light receiving unit 50 is perpendicular to the axis x. The fan-like light that is emitted by the point light source 81 is the flux of light beams that travel in the direction of the arrow $\alpha$, in the direction of the arrow $\beta$, and in the other directions.

The light beam that travels in the direction of the arrow $\alpha$ is reflected by the retroreflective member 24, is condensed by the condensing lens 51, and then reaches a light received position p1 on the light receiving unit 50. Furthermore, the light beam that travels in the direction of the arrow $\beta$ is reflected by the retroreflective member 24, is condensed by the condensing lens 51, and then reaches a light received position p2 on the light receiving unit 50.

As described above, after multiple light beams are emitted by the point light source 81, are reflected by the retroreflective member 24, and are returned through the corresponding optical path, they reach different positions on the light receiving unit 50 due to the effect of the condensing lens 51. At that time, when a given position on the touch panel 12 is pointed by using the pointing unit 2 and a corresponding light beam is blocked, light does not reach the point that is on the light receiving unit 50 and that corresponds to the light beam.

Therefore, the examination on the light intensity distribution on the light receiving unit 50 makes it possible to determine which one of the beams is blocked.

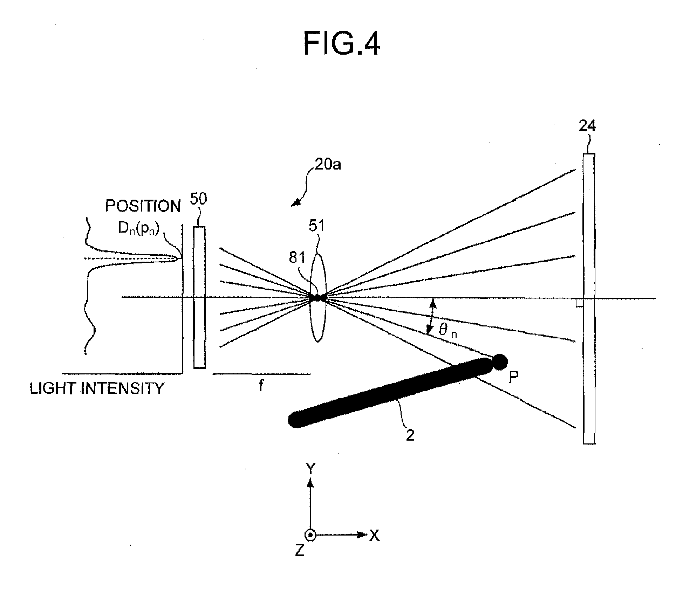

As illustrated in FIG. 4, after light is emitted by the first light emitting/receiving unit 20a to the +x side, the light is reflected by the retroreflective member 24, and is returned to the point light source 81 through the same optical path. After returning from the retroreflective member 24, the retroreflected light passes through the center of the condensing lens 51 and travels to the -x side of the condensing lens 51 (the side of the light receiving unit 50) through the optical path that is point-symmetric with respect to the center of the condensing lens 51.

Here, if the pointing unit 2 is not in contact with or is not located close to the touch panel 12, the light intensity distribution on the entire area of the light receiving unit 50 is nearly constant. Conversely, as illustrated in FIG. 4, if the pointing unit 2 is in contact with the arbitrary pointed position P on the touch panel 12, the beam that travels from the first light emitting/receiving unit 20a toward the pointed position P is blocked, whereby a low light-intensity area (dark point) is generated on a position $D_n$ of the light receiving unit 50. The position $D_n$ corresponds to the outgoing/incoming angle $\theta_n$ of the blocked beam, and $\theta_n$ can be determined by detecting $D_n$. That is, $\theta_n$ can be represented by using the following Equation (1) as a function of $D_n$.

$$\theta_n = \arctan(D_n/f) \tag{1}$$

Furthermore, $D_n$ is equivalent to the y-coordinate of a light received position $p_n$, where the origin thereof is the intersection point between the light receiving surface of the light receiving unit 50 and the straight line that is parallel to the axis x that passes through the center of the condensing lens 51.

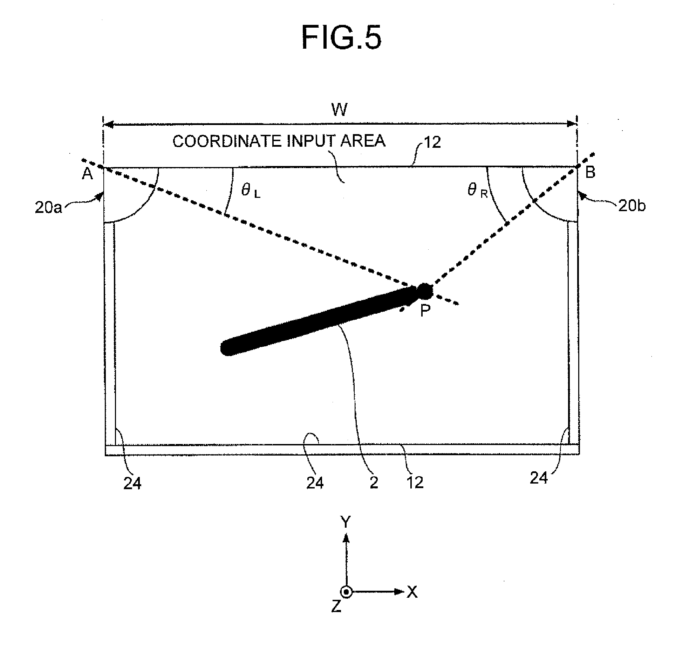

Here, particularly, $\theta_n$ in FIG. 4 is replaced with $\theta_{nL}$, and $D_n$ with $D_{nL}$. Furthermore, as illustrated in FIG. 5, due to conversion g of the geometric positional relationship between the first light emitting/receiving unit 20a and the coordinate input area (pointed area) of the touch panel 12, an angle $\theta_L$ formed by the axis X and a straight line AP connecting a position A of the first light emitting/receiving unit 20a and the pointed position P on the touch panel 12 is represented by using the following Equation (2) as a function of $D_{nL}$ that is determined by using the above-described Equation (1).

$$\theta_L = g(\theta_{nL}),\ \theta_{nL} = \arctan(D_{nL}/f) \tag{2}$$

In the same manner, with respect to the second light emitting/receiving unit 20b, L in the above-described Equation (2) is replaced with R and, due to conversion h of the geometric positional relationship between the second light emitting/receiving unit 20b and the coordinate input area of the touch panel 12, an angle $\theta_R$ formed by the axis X and a straight line BP connecting a position B of the second light emitting/receiving unit 20b and the pointed position P on the touch panel 12 is represented by using the following Equation (3).

$$\theta_R = h(\theta_{nR}),\ \theta_{nR} = \arctan(D_{nR}/f) \tag{3}$$

Here, the first light emitting/receiving unit 20a is installed in the coordinate input area with an interval W as illustrated in FIG. 5, and the coordinates (X, Y) of the pointed position P on the coordinate input area are represented by using the following Equations (4) and (5).

$$X = w\tan\theta_R/(\tan\theta_L + \tan\theta_R) \tag{4}$$

$$Y = w\tan\theta_L \times \tan\theta_R/(\tan\theta_L + \tan\theta_R) \tag{5}$$

As described above, X and Y can be represented as the functions of $D_{nL}$ and $D_{nR}$. In this case, the positions $D_{nL}$ and $D_{nR}$ of the dark points on the light receiving units 50 in the first and second light emitting/receiving units 20a and 20b are detected, and the geometric arrangement of each of the light emitting/receiving units is considered, whereby it is possible to detect the coordinates of the pointed position P that is pointed by using the pointing unit 2.

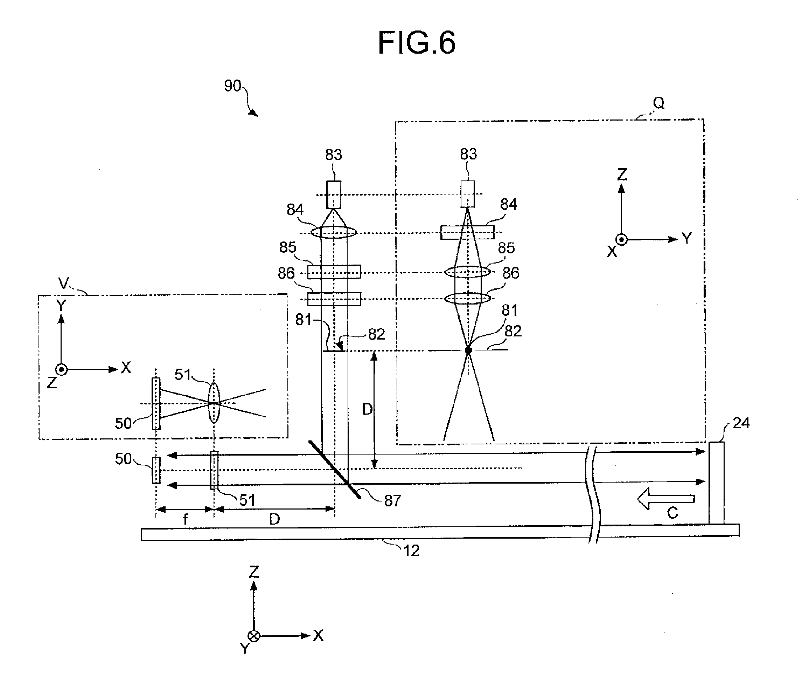

Next, an explanation is given of an example of the optical system 90 that includes the condensing lens 51. FIG. 6 illustrates a state where a single light emitting/receiving unit is provided on the touch panel 12.

Here, a light source that is used as the light emitting unit 83 is, for example, a laser diode or pinpoint LED, capable of emitting light having a certain degree of directivity. The light emitting unit 83 emits light in the -Z direction. Furthermore, for example, a photo diode or photo transistor is used as the light receiving unit 50.

The optical system 90 includes, in addition to the above-described condensing lens 51, a cylindrical lens group that includes three cylindrical lenses 84, 85, and 86 that are provided on the optical path of light from the light emitting unit 83; a slit plate 82 that is provided on the optical path of light that passes through the cylindrical lens group; a half mirror 87 that is provided on the optical path of light that passes through the slit plate 82; or the like.

After light is emitted by the light emitting unit 83 in the -Z direction, the light is collimated by the cylindrical lens 84 in only the direction of the axis X and is then condensed in the direction of the axis Y by the two cylindrical lenses 85 and 86 that have a curvature distribution that is orthogonal to that of the cylindrical lens 84. A section Q in FIG. 6 is a diagram of the light emitting unit 83, the cylindrical lens group, and the slit plate 82 when viewed from the +X side. Due to the effect of the cylindrical lens group, the light is shaped in the form of a line that extends in the direction of the axis X in cross-section and is emitted to the -Z side of the cylindrical lens 86. The light from the cylindrical lens 86 is incident on the slit plate 82 on which an elongated slit is formed and extends in the direction of the axis X, whereby the point light source 81 is formed as a secondary light source. In the following, the point light source 81 is also referred to as the secondary light source 81 for convenience.

Specifically, the secondary light source 81 is formed at the position of the slit of the slit plate 82 so as to emit linear light that extends in the direction of the axis X in cross-section. The light from the secondary light source 81 is reflected by the half mirror 87 to the +X side so as to travel along the touch panel 12 as a parallel light that does not expand in the direction of the axis Z but, in a direction parallel to the touch panel 12, expands in a fan-like form with the secondary light source 81 at the center. The traveling light is reflected by the retroreflective member 24 that is provided on the outer edge of the touch panel 12 and is returned to the side of the half mirror 87 (in the direction of the arrow C in FIG. 6) through the same path. After transmitting through the half mirror 87, the light travels in parallel to the touch panel 12, passes through the condensing lens 51, and is incident on the light receiving unit 50.

Here, the secondary light source 81 and the condensing lens 51 have a conjugated positional relationship with respect to the half mirror 87 (see the arrow D in FIG. 6). Furthermore, a section V in FIG. 6 is a diagram of the light receiving unit 50 and the condensing lens 51 when viewed in the +Z direction. The above-described optical system 90 may be changed as appropriate.

Next, an explanation is given of the positional-information calculation unit 14a. The positional-information calculation unit 14a calculates the positional information (XY coordinates) of the pointed position P by using the principle of triangulation and by using a light received signal from the light receiving unit of each of the light emitting/receiving units that are provided in the above-described optical touch panel device 100, and then outputs it to the signal input unit 16a via the control unit 14b at a predetermined rate.

The coordinate value of the pointed position P and a light blocked signal are output from the positional-information calculation unit 14a at a predetermined rate and are input to the signal processing unit 16b (driver) via the signal input unit 16a. With regard to the light blocked signal, when the light is blocked by the stylus pen 10 in the optical touch panel device 100, "the light blocked signal = true" and, otherwise, "the light blocked signal = false". The coordinate value of the pointed position P is a valid value when the light blocked signal is true and, it is an invalid value when the light blocked signal is false.

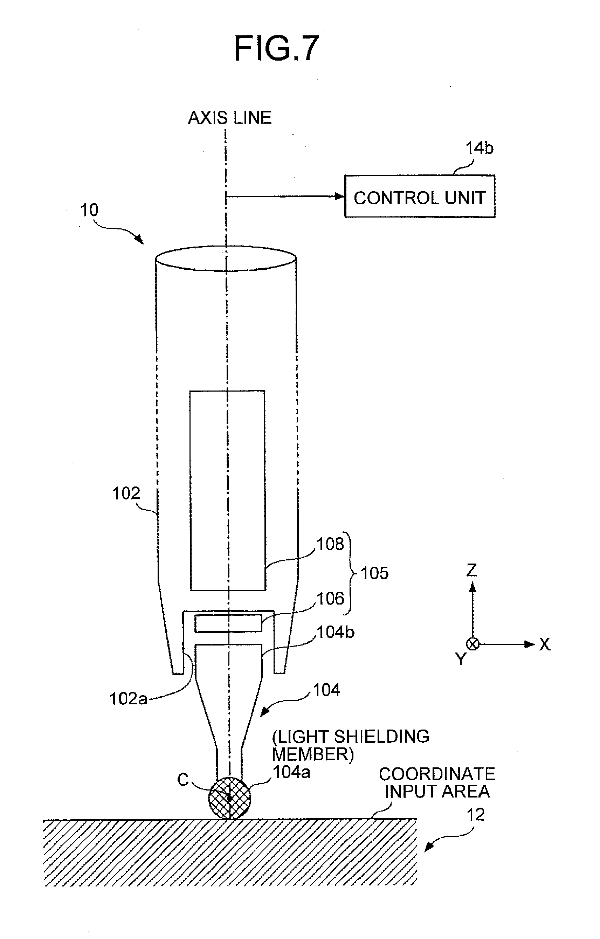

A detailed explanation is given below of the stylus pen 10 with reference to FIGS. 7 to 8C. As illustrated in FIG. 7, the stylus pen 10 extends along a predetermined axis line. As illustrated in FIG. 7, the stylus pen 10 includes, for example, a grip section 102 that is constituted by a substantially cylindrical and elongated member that extends in the direction of the above-described axis line; a movable pen tip 104 that is attached to the grip section 102; and a pressure detection unit 105.

For example, the movable pen tip 104 is constituted by a member that extends in the direction of the above-described axis line and includes an end 104a that is constituted by a spherical light shielding member. The above-described axis line passes through the central part (the center of gravity) C of the end 104a. That is, the end 104a (the light shielding member) has a symmetrical shape with respect to the above-described axis line. In the following, the end 104a is also referred to as the light shielding member 104a for convenience.

In this case, the distance is constant between the central part C, which is a predetermined part on the above-described axis line in the light shielding member 104a, and an arbitrary area on the surface (outer circumference) of the end 104a.

Here, the "light shielding member" refers to an object that blocks at least part of incident light. In the present embodiment, an object that blocks all incident light is used as an example of the light shielding member. In this case, the position of a shadow that the incident light does not reach can be detected in a stable and accurate way.

A base end section 104b of the movable pen tip 104 is engaged with a recessed section 102a that is formed on an end surface of the grip section 102. Furthermore, the movable pen tip 104 is coupled to the grip section 102 via, for example, an elastic member such that the movable pen tip 104 is movable relative to the grip section 102 in the direction of the axis line of the grip section 102 at a predetermined stroke.

The pressure detection unit 105 includes, for example, a pressure sensor 106, and a signal processing circuit 108 that processes a detection signal from the pressure sensor 106.

The pressure sensor 106 is attached to the bottom surface of the recessed section 102a. Specifically, the pressure sensor 106 is provided between the movable pen tip 104 and the bottom surface of the recessed section 102a. The pressure sensor 106 changes a resistance value in accordance with applied pressure, and it is, for example, FlexiForce that is manufactured by Nitta Corporation, INASTOMER that is manufactured by INABA RUBBER Co., Ltd, or the like.

When the end 104a of the movable pen tip 104 is brought into contact with the touch panel 12, the movable pen tip 104 is moved toward the pressure sensor 106 so that the pressure sensor 106 is pressed.

In the following, a true/false signal that is input from the pressure detection unit 105 to the signal processing unit 16b via the signal input unit 16a is referred to as a pressure signal. Specifically, when the movable pen tip 104 is in physical contact with the touch panel 12, "the pressure signal = true" in the signal processing unit 16b and, otherwise, "the pressure signal = false".

The signal processing circuit 108 includes a conversion circuit that converts a change in the resistance value of the pressure sensor 106 into a voltage; an A/D conversion circuit that converts the voltage into a digital value; a memory circuit that stores a predetermined threshold; a threshold processing circuit that compares the pressure signal, which is converted into the digital value, with the threshold stored in the memory circuit, outputs "true" if the pressure signal exceeds the threshold, and, otherwise, outputs "false"; and an output circuit that sends, to the signal processing unit 16b via the signal input unit 16a, a logical value that is output from the threshold processing circuit at a predetermined rate.

A user points a desired position (pointed position) on the touch panel 12 by bringing an arbitrary area that is part of the surface of the end 104a (light shielding member) of the stylus pen 10, which is configured as described above, into contact with the desired position.

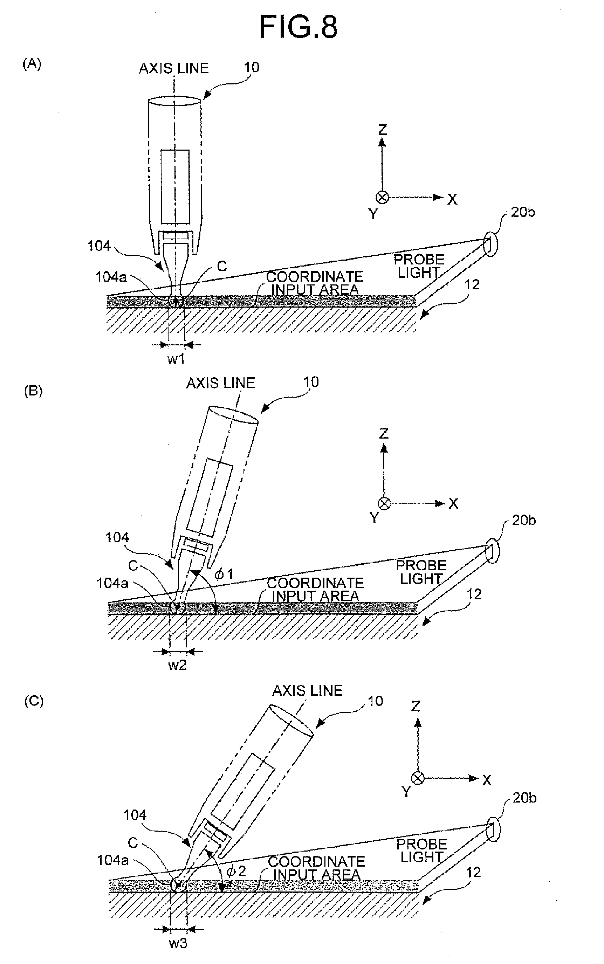

Here, as described above, the end 104a of the stylus pen 10 is spherical; therefore, when the end 104a is in contact with an arbitrary position on the touch panel 12, the width (the width in a direction along the touch panel 12) of blocked light that is emitted by each of the light emitting/receiving units is constant regardless of the tilt angle of the stylus pen 10 with respect to the touch panel 12 (see (A) to (C) of FIG. 8). In this case, the width of the dark point illustrated in FIG. 4 and the center position thereof are not changed regardless of the tilt angle of the stylus pen 10. Specifically, the center position of the shadow (light blocked image) that occurs due to light blocking of the end 104a is not changed regardless of the tilt angle of the stylus pen 10. As a result, the positional information (XY coordinates) calculated by the positional-information calculation unit 14a is not changed regardless of the tilt angle of the stylus pen 10.

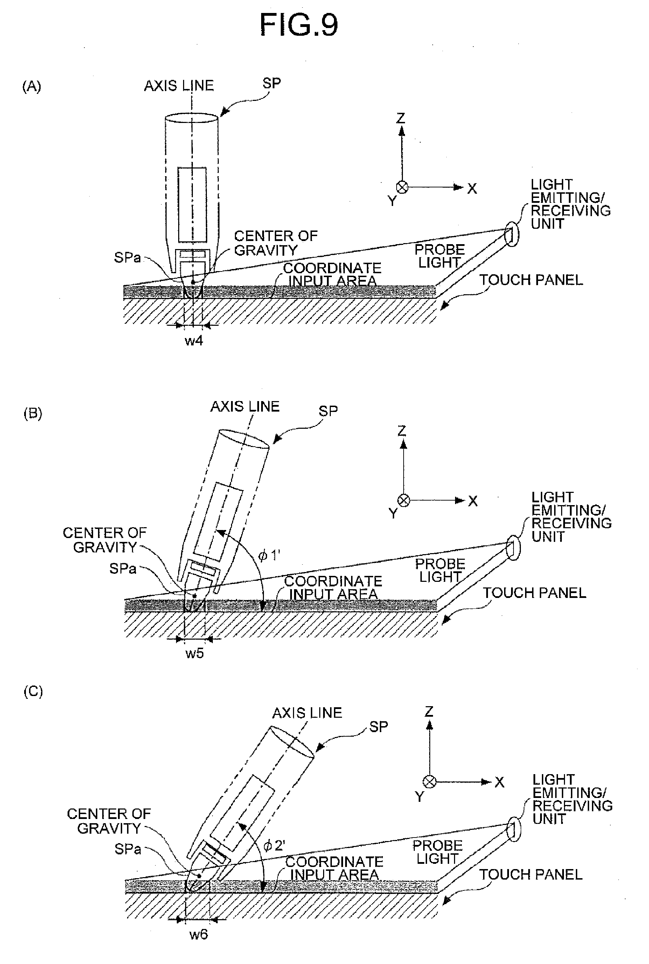

A detailed explanation is given below of the above effect. As illustrated in FIGS. 8 and 9, light is emitted by the light emitting/receiving unit that is provided on, for example, the back side with respect to the drawing plane, part of the light is blocked on the pointed position that is pointed by using the stylus pen 10, and the remaining part thereof is transmitted, is reflected by an undepicted retroreflective member that is provided on the front side with respect to the drawing plane in a retroreflective manner, and is returned to the light emitting/receiving unit.

In (A) to (C) of FIG. 8, w1 to w3 indicate the width of light that is blocked by the end 104a of the movable pen tip 104 when a desired position on the touch panel 12 is pointed by using the stylus pen 10 according to the present embodiment. In FIG. 8, (A) illustrates a state where the axis line of the stylus pen 10 is perpendicular to the touch panel 12. In FIG. 8, (B) illustrates a state where the axis line of the stylus pen 10 is tilted with respect to the touch panel 12 at a tilt angle $\phi 1$. FIG. 8C illustrates a state where the axis line of the stylus pen 10 is tilted with respect to the touch panel 12 at a tilt angle $\phi 2$ ($<\phi 1$).

Here, as the end 104a of the stylus pen 10 is spherical, the width of blocked light is not changed regardless of the angle that is formed between the axis line of the stylus pen 10 and the touch panel 12; thus, w1 = w2 = w3. Furthermore, as the XY coordinates of the central part (the center of gravity) of the end 104a (light shielding member) match the XY coordinates of the area of the end 104a that is in contact with the touch panel 12 regardless of the above-described angle; therefore, the center position of the shadow (light blocked image) that occurs due to light blocking of the end 104a (the position of the dark point detected on the light receiving unit 50) is not changed regardless of the above-described angle. As a result, the actual XY coordinates of the position on the touch panel 12 that is in contact with the end 104a match the XY coordinates that are calculated by the positional-information calculation unit 14a regardless of the above-described angle. That is, it is possible to determine the XY coordinates of the area that is on the touch panel 12 and that is in contact with the end 104a in a stable and accurate manner.

In (A) to (C) of FIG. 9, w4 to w6 indicate the width of light that is blocked by an end SPa of a stylus pen SP when an arbitrary position on the touch panel is pointed by using the stylus pen SP in a comparative example. In FIG. 9, (A) illustrates a state where the axis line of the stylus pen SP is perpendicular to the touch panel. In FIG. 9, (B) illustrates a state where the axis line of the stylus pen SP is tilted with respect to the touch panel at a tilt angle $\phi 1$'. In FIG. 9, (C) illustrates a state where the axis line of the stylus pen SP is tilted with respect to the touch panel at a tilt angle $\phi 2$' ($<\phi 1$').

Here, the end SPa (the light shielding member) of the stylus pen SP in the comparative example has a tapered and substantially conical shape. That is, in the comparative example, only the shape of the end of the stylus pen is different from that in the present embodiment. In this case, the width of blocked light is different depending on the angle that is formed between the axis line of the stylus pen SP and the touch panel, and therefore w4 $\neq$ w5 $\neq$ w6. Furthermore, the XY coordinates of the center of gravity of the end SPa is different from the XY coordinates of the position of the touch panel that is in contact with the end SPa depending on the above-described angle; therefore, the center position of the shadow (light blocked image) that occurs due to light blocking of the end SPa (the position of the dark point detected on the light receiving unit) is different depending on the above-described angle. As a result, the XY coordinates of the position on the touch panel that is in contact with the end SPa is different from the XY coordinates that are calculated by the positional-information calculation unit depending on the above-described angle. That is, it is difficult to determine the XY coordinates of the area that is on the touch panel and that is in contact with the end SPa in a stable and accurate way. As a result, in the comparative example, although the same position on the touch panel is pointed by using the stylus pen SP, the positional information (XY coordinates) calculated by the positional-information calculation unit is changed in accordance with the tilt angle of the stylus pen SP.

The above-described stylus pen 10 according to the present embodiment is a stylus that is used for pointing a desired position on the touch panel 12 that is included in the optical touch panel device 100. The stylus pen 10 extends along a predetermined axis line, and an arbitrary area that is part of the surface of the end 104a is brought into contact with the desired position. The end 104a includes the light shielding member 104a that blocks all incident light, the axis line passes through the central part C of the light shielding member 104a, and the distance is constant between a predetermined part (the central part C) on the axis line in the light shielding member 104a and the arbitrary area.

In this case, the positional information on the position of the touch panel 12 that is in contact with the surface of the light shielding member 104a on the plane that is parallel to the touch panel 12 matches the positional information on the central part C of the light shielding member 104a on the plane that is parallel to the touch panel 12 regardless of the tilt angle of the stylus pen 10 with respect to the touch panel 12.

As a result, it is possible to stably and accurately determine the positional information on a desired position that is on the touch panel 12 and that is pointed by using the stylus pen 10.

Furthermore, as the light shielding member 104a included in the end 104a has a spherical shape, it is easier to recognize the light shielding member 104a on first sight regardless of the tilt angle of the stylus pen 10, compared to, for example, the above-described comparative example and, without forming a mark, such as an engraved mark, on the light shielding member 104a, the light shielding member 104a can be easily brought into contact with a desired position on the touch panel 12. As a result, it is possible to improve the operational performance of the stylus pen 10.

Although the end 104a of the stylus pen 10 is constituted by a spherical light shielding member in the above-described embodiment, this is not a limitation, and it is applicable if the distance is constant between a predetermined area on the above-described axis line in the light shielding member and an arbitrary area that is on the surface of the end of the stylus pen and that is in contact with the touch panel 12.

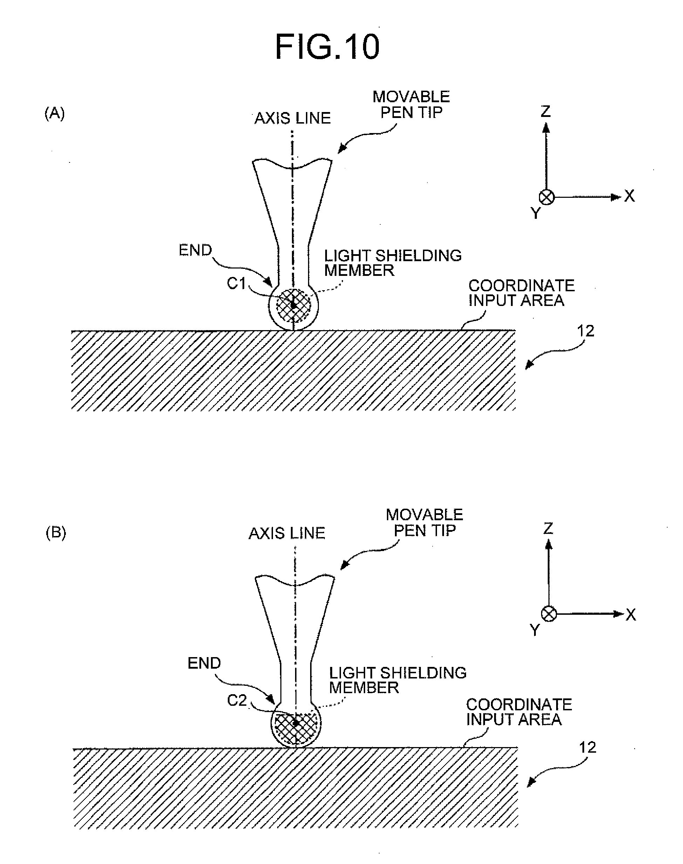

Specifically, as illustrated in a first modified example in (A) of FIG. 10, for example, part of the end of a movable pen tip, which is symmetrical with respect to the above-described axis line and is formed of at least the half of a sphere, may be constituted by a light shielding member that is formed of a sphere whose center matches the center of the above sphere. In this case, the distance is constant between a central part C1 that is a predetermined part on the above-described axis line in the light shielding member and an arbitrary area that is on the surface of the end of the movable pen tip and that is contact with the touch panel 12.

Furthermore, as illustrated in a second modified example in (B) of FIG. 10, for example, part of the end of a movable pen tip, which is symmetrical with respect to the above-described axis line and is formed of at least the half of a sphere, may be constituted by a light shielding member that is formed of at least the half of a sphere whose center matches the center of the above sphere and which is symmetric with respect to the above-described axis line. In this case, the distance is constant between a predetermined part C2 on the above-described axis line in the light shielding member and an arbitrary area that is on the surface of the end of the movable pen tip and that is contact with the touch panel 12.

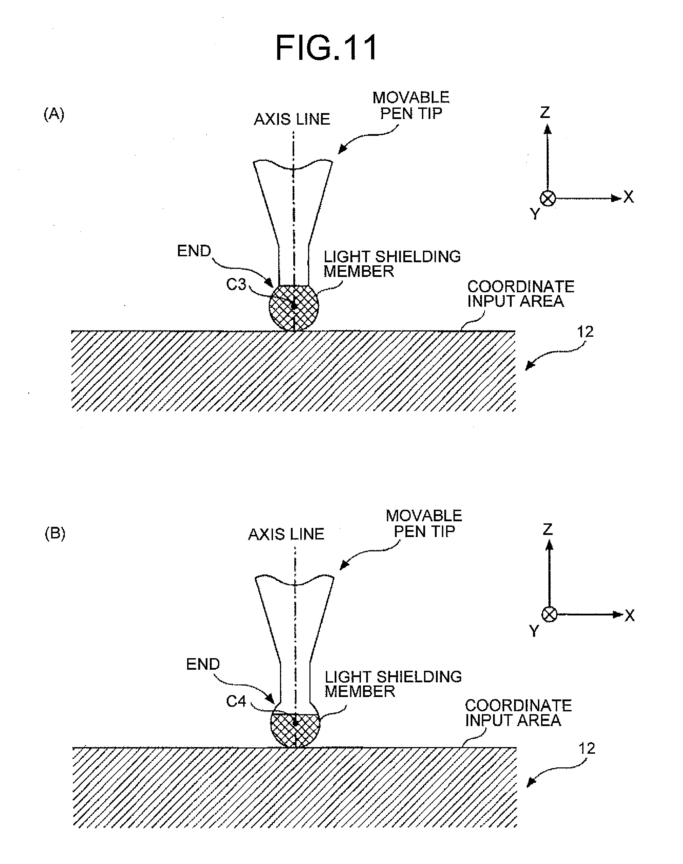

Furthermore, as illustrated in a third modified example (1 and 2) in (A) and (B) of FIG. 11, for example, at least part of the end of a movable pen tip, which is symmetrical with respect to the above-described axis line and is formed of at least the half of a sphere, may be constituted by a light shielding member that is formed of at least the half of a sphere whose center matches the center of the above sphere and which is symmetric with respect to the above-described axis line. In this case, the distance is constant between a predetermined part C3 (C4) on the above-described axis line in the light shielding member and an arbitrary area that is on the surface of the end of the movable pen tip and that is contact with the touch panel 12.

Furthermore, in the above-described embodiment and each of the modified examples, the light shielding member is a henagon (a figure formed by one surface) or dihedron that is formed of at least the half of a sphere; however, it may be a polyhedron (e.g., regular polyhedron) that has three or more faces. In this case, it is preferable that the above-described axis line passes through the center of gravity of the light shielding member and the distance is constant between a predetermined area on the above-described axis line in the light shielding member and an arbitrary area that is on the surface of the end of the stylus and that is in contact with the touch panel 12.

Furthermore, in the above-described embodiment and each of the modified examples, the end 104a of the stylus pen 10 is brought into contact with a desired position on the touch panel 12 so that the desired position is pointed; additionally or alternatively, for example, the end of the stylus pen may be located close to a desired position on the touch panel (without being brought into contact) so that the desired position is pointed. In this case, the pressure detection unit 105 may not be provided.

Moreover, in the above-described embodiment and each of the modified examples, the light shielding member that blocks all incident light is used; however, instead of this, the one that blocks part of incident light may be used.

Moreover, in the above-described embodiment and each of the modified examples, the end of the stylus pen has a shape such that an arbitrary area that is part of the surface thereof is brought into contact with a desired position on the touch panel 12; however, it may have a shape (e.g., semispherical shape) such that the arbitrary area that is the entire surface is brought into contact with a desired position on the touch panel 12.

Furthermore, in the above-described embodiment and each of the modified examples, the axis line that passes through the center of gravity of the light shielding member matches the axis line of the stylus; however, they may not match.

Moreover, in the above-described embodiment, an electronic blackboard that includes a large-sized touch panel is used as the optical touch panel device 100; however, this is not a limitation and, for example, a tablet terminal that includes a small-sized touch panel may be used.

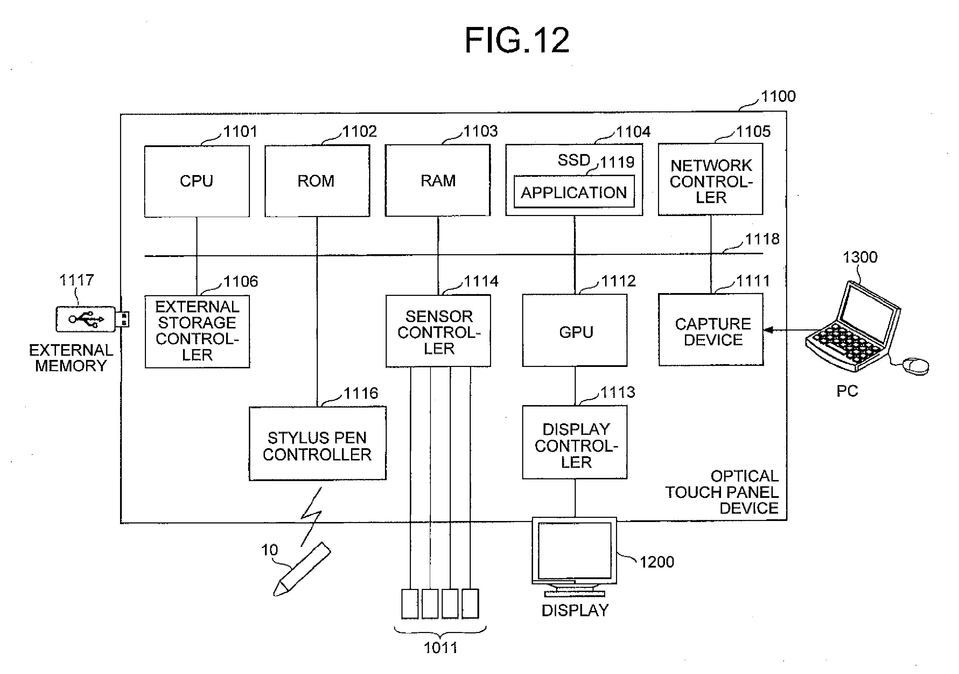

FIG. 12 is a diagram that illustrates a hardware configuration of an optical touch panel device according to another embodiment of the present invention. An optical touch panel device 1100 is an information processing apparatus that has been developed for a coordinate detection system. The optical touch panel device 1100 includes a CPU 1101, a ROM 1102, a RAM 1103, an SSD 1104, a network controller 1105, an external storage controller 1106, a sensor controller 1114, a GPU 1112, and a capture device 1111 that are electrically connected to one another via a bus line 1118, such as an address bus or data bus.

The CPU 1101 executes an application so as to control the overall operation of the optical touch panel device 1100 that is the coordinate detection system. The ROM 1102 stores an IPL, or the like, and primarily stores a program that is executed by the CPU 1101 during a start-up. The RAM 1103 is a work area when the CPU 1101 executes an application. The SSD 1104 is a non-volatile memory that stores an application 1119 or various types of data for the coordinate detection system. The network controller 1105 performs processing on the basis of a communication protocol during a communication with a server, or the like, via an undepicted network. The network is a LAN, WAN (e.g., the Internet) in which a plurality of LANs are connected, or the like.

The external storage controller 1106 writes to or reads from an external memory 1117 that is attachable and removable. The external memory 1117 is, for example, a USB memory or SD card. The capture device 1111 fetches (captures) an image that is displayed on a display device by a PC 1300. The GPU 1112 is a processor that is dedicated to drawing and that calculates the pixel value of each pixel of a display 1200. A display controller 1113 outputs the image generated by the GPU 1112 to the display 1200.

The sensor controller 1114 is connected to four detection units 1011 and detects the coordinates by using a triangulation method that uses an infrared light blocking or pen emission method.

In the present embodiment, the optical touch panel device 1100 has a function to communicate with the stylus pen 10. The stylus pen 10 has a unit for sending signals to the optical touch panel device 1100. As illustrated in FIG. 12, the optical touch panel device 1100 has a stylus pen controller 1116 so as to receive a pressure signal from the stylus pen 10. Thus, the optical touch panel device 1100 is capable of detecting whether the end of the stylus pen 10 is pressed.

The application for the coordinate detection system may be distributed as being stored in the external memory 1117 or may be downloaded from an undepicted server via the network controller 1105. The application may be in a compressed state or in an executable format.

Thus, it is possible to stably and accurately determine the positional information on a desired position that is on a touch panel and that is pointed by using a stylus.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1. A stylus (10), comprising
an end having a surface, an arbitrary area of which is to be moved close to or brought into contact with a desired position on a touch panel (12) of an optical touch panel device (100), the end including a light shielding member (104a) configured to block at least part of incident light, wherein
the stylus (10) extends along an axis line that passes through a center of gravity (C) of the light shielding member (104a), and
a distance between a predetermined part of the light shielding member (104a) on the axis line and the arbitrary area is constant.

2. The stylus (10) according to claim 1, wherein the light shielding member (104a) has a symmetrical shape with respect to the axis line.

3. The stylus (10) according to claim 2, wherein the light shielding member (104a) is formed of at least a half of a sphere.

4. The stylus according to any one of claims 1 to 3, wherein the end is formed of at least a half of a sphere that has a symmetrical shape with respect to the axis line.

5. The stylus (10) according to claim 4, wherein an inside part of the end is formed from the light shielding member (104a).

6. The stylus (10) according to any one of claims 1 to 5, further comprising a pressure detection unit (105) configured to detect a pressure applied to the end when the arbitrary area is in contact with the desired position.

7. An optical touch panel device (100), comprising:

the stylus (10) according to any one of claims 1 to 6;

the touch panel (12) which has a rectangular plate shape and on which the desired position is pointed by using the stylus (10);

a pair of light emitting/receiving devices (20a, 20b) each configured to include a light emitting unit (83) and a light receiving unit (50), the light emitting/receiving devices (20a, 20b) being separately provided on two ends of the touch panel (12);

a retroreflective member (24) configured to reflect incident light into a direction opposite to an incident direction, the retroreflective member (24) being provided along an outer edge of the touch panel (12);

optical systems (90) provided for the light emitting/receiving devices (20a, 20b), respectively, each optical system being configured to guide light emitted from the light emitting unit (83) of the corresponding light emitting/receiving device (20a, 20b) into the retroreflective member (24) so that the light travels along the touch panel (12), and guide the light reflected by the retroreflective member (24) into the light receiving unit (50) of the corresponding light emitting/receiving device (20a, 20b); and

a positional-information calculation unit (14a) configured to, in response to pointing the desired position by the stylus (10), calculate positional information of the desired position by using positional information on a shadow that occurs when light emitted by each of the light emitting/receiving devices (20a, 20b) is blocked by the light shielding member (104a) of the stylus (10).

8. The optical touch panel device (100) according to claim 7, wherein each optical system is configured to shape the light in a form of a line that extends in a direction perpendicular to the touch panel (12) in cross-section, the light traveling along the touch panel.

9. The optical touch panel device (100) according to claim 7 or 8, wherein the light emitting unit (83) is configured to emit directional light.

# FIG.1

100

16

PC UNIT

16c

OS

16b

SIGNAL PROCESSING UNIT (DRIVER)

16d

APPLICATION

16a

SIGNAL INPUT
UNIT

14

TOUCH-PANEL CONTROL UNIT

14a

14b

CONTROL UNIT

POSITIONAL-
INFORMATION
CALCULATION UNIT

10

105

PRESSURE
DETECTION UNIT

STYLUS PEN

# FIG.2

# FIG.3

# FIG.4

# FIG.5

# FIG.6

EP 2 775 378 A1

# FIG.7

AXIS LINE

14b

CONTROL UNIT

10

102

108

105

106

104b

102a

104

(LIGHT SHIELDING
MEMBER)
104a

C

COORDINATE
INPUT AREA

12

Z

Y

X

# FIG.8

(A)

AXIS LINE    10

Z

Y ⊗ → X

104
104a
C
COORDINATE
INPUT AREA
PROBE
LIGHT    20b
12

w1

(B)

AXIS LINE    10

Z

Y ⊗ → X

104
C
104a
$\phi 1$
COORDINATE
INPUT AREA
PROBE
LIGHT    20b
12

w2

(C)

AXIS LINE    10

Z

Y ⊗ → X

104
C
104a
$\phi 2$
COORDINATE
INPUT AREA
PROBE
LIGHT    20b
12

w3

# FIG.9

(A)

AXIS LINE    SP

Z
Y⊗→X

LIGHT
EMITTING/
RECEIVING
UNIT

SPa

CENTER OF
GRAVITY

PROBE
LIGHT

COORDINATE
INPUT AREA

TOUCH PANEL

w4

(B)

AXIS LINE    SP

Z
Y⊗→X

LIGHT
EMITTING/
RECEIVING
UNIT

CENTER OF
GRAVITY

SPa

$\phi 1'$

PROBE
LIGHT

COORDINATE
INPUT AREA

TOUCH PANEL

w5

(C)

AXIS LINE    SP

Z
Y⊗→X

LIGHT
EMITTING/
RECEIVING
UNIT

CENTER OF
GRAVITY

SPa

$\phi 2'$

PROBE
LIGHT

COORDINATE
INPUT AREA

TOUCH PANEL

w6

# FIG.10

(A)

MOVABLE PEN TIP

AXIS LINE

END

C1

LIGHT SHIELDING MEMBER

COORDINATE INPUT AREA

12

Z

Y

X

(B)

MOVABLE PEN TIP

AXIS LINE

END

C2

LIGHT SHIELDING MEMBER

COORDINATE INPUT AREA

12

Z

Y

X

20

# FIG.11

(A)

(B)

# FIG.12

Europäisches
Patentamt

European
Patent Office

Office européen
des brevets

# EUROPEAN SEARCH REPORT

**Application Number**

EP 14 15 5666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 500 801 A2 (RICOH CO LTD [JP]) 19 September 2012 (2012-09-19) | 1-6 | INV.<br>G06F3/042<br>G06F3/0354 |
| Y | * paragraph [0002] - paragraph [0004] *<br>* paragraph [0023] - paragraph [0034] *<br>* figures 1-4 * | 7-9 | |
| X | US 2012/327043 A1 (WU KUEI-HUANG [TW]) 27 December 2012 (2012-12-27) | 1-5 | |
| Y | * paragraph [0002] *<br>* paragraph [0022] - paragraph [0024] *<br>* paragraph [0027] *<br>* claim 5 *<br>* figures 2, 5A, 5B * | 7-9 | |
| X | US 2013/002536 A1 (YOSHIDA KAZUKI [JP] ET AL) 3 January 2013 (2013-01-03)<br>* paragraph [0008] *<br>* paragraph [0044] - paragraph [0049] *<br>* paragraph [0064] - paragraph [0088] *<br>* figures 1-9 * | 1-5 | |
| X | US 2012/162146 A1 (JIANG KAI-LI [CN] ET AL) 28 June 2012 (2012-06-28) | 1-5 | TECHNICAL FIELDS SEARCHED (IPC)<br><br>G06F |
| Y | * paragraph [0003] *<br>* paragraph [0042] - paragraph [0049] *<br>* figures 1-4 * | 7-9 | |
| X | JP S57 152033 A (HITACHI LTD) 20 September 1982 (1982-09-20) | 1-4,6 | |
| Y | * the whole document * | 7-9 | |
| Y | US 6 570 103 B1 (SAKA YASUHIKO [JP] ET AL) 27 May 2003 (2003-05-27) | 7-9 | |
| A | * column 8, line 13 - column 11, line 36 *<br>* figures 1-7 * | 1 | |

The present search report has been drawn up for all claims

| Place of search | Date of completion of the search | Examiner |
|---|---|---|
| Munich | 30 June 2014 | Hauber, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 5666

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2014

| Patent document cited in search report | | Publication date | Patent family member(s) | | Publication date |
|---|---|---|---|---|---|
| EP 2500801 | A2 | 19-09-2012 | CN | 102707816 A | 03-10-2012 |
| | | | EP | 2500801 A2 | 19-09-2012 |
| | | | JP | 2012190392 A | 04-10-2012 |
| | | | US | 2012235934 A1 | 20-09-2012 |
| US 2012327043 | A1 | 27-12-2012 | NONE | | |
| US 2013002536 | A1 | 03-01-2013 | CN | 102855030 A | 02-01-2013 |
| | | | JP | 2013012113 A | 17-01-2013 |
| | | | US | 2013002536 A1 | 03-01-2013 |
| US 2012162146 | A1 | 28-06-2012 | US | 2012162146 A1 | 28-06-2012 |
| | | | US | 2012162148 A1 | 28-06-2012 |
| | | | US | 2012162149 A1 | 28-06-2012 |
| | | | US | 2012162150 A1 | 28-06-2012 |
| | | | US | 2012162151 A1 | 28-06-2012 |
| | | | US | 2012162152 A1 | 28-06-2012 |
| | | | US | 2012162153 A1 | 28-06-2012 |
| | | | US | 2012162154 A1 | 28-06-2012 |
| | | | US | 2012162155 A1 | 28-06-2012 |
| JP S57152033 | A | 20-09-1982 | NONE | | |
| US 6570103 | B1 | 27-05-2003 | JP | 4083941 B2 | 30-04-2008 |
| | | | JP | 2001142642 A | 25-05-2001 |
| | | | US | 6570103 B1 | 27-05-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4627781 B